Europäisches Patentamt

European Patent Office

Office européen des brevets

(11) Veröffentlichungsnummer: **0 058 769**
**A2**

(12) **EUROPÄISCHE PATENTANMELDUNG**

(21) Anmeldenummer: 81109852.4

(22) Anmeldetag: 24.11.81

(51) Int. Cl.³: **B 23 P 1/12**

(30) Priorität: 20.02.81 DE 3106381

(43) Veröffentlichungstag der Anmeldung: 01.09.82
Patentblatt 82/35

(84) Benannte Vertragsstaaten: **AT BE CH FR GB IT LI LU NL SE**

(71) Anmelder: **Friedrich Deckel Aktiengesellschaft, Plinganserstrasse 150, D-8000 München 70 (DE)**

(72) Erfinder: **Seerieder, Karl, Ahornstrasse 4a, D-8038 Gröbenzell (DE)**
Erfinder: **Borowsky, Bernd, Margeritenstrasse 30, D-8190 Wolfratshausen (DE)**

(54) Verfahren und Vorrichtung zum Einrichten der Elektrode einer Elektroerosionsmaschine.

(57) Verfahren und Vorrichtung zum Einrichten der Elektrode einer Elektroerosionsmaschine, wobei die Elektrode in rasch aufeinanderfolgenden Schritten zugestellt und nach jedem Schritt abgefragt wird, ob die Elektrode Kontakt mit dem Werkstück hat oder nicht. Die einzelnen Zustellschritte sind kleiner als die zulässige Stauchung der Elektrode bzw. der diese tragenden Bauteile infolge Auffahrens der Elektrode auf das Werkstück. Die Vorrichtung umfaßt einen an sich kontinuierlich arbeitenden Zustellantrieb, welcher pulsierend betrieben wird.

- 1 -

## Verfahren und Vorrichtung zum Einrichten der Elektrode einer Elektroerosionsmaschine

Die Erfindung betrifft ein Verfahren sowie eine Vorrichtung zum Einrichten der Elektrode einer Elektroerosionsmaschine, welche einen durch die Spannung im Arbeitsspalt über eine Analogsteuerung kontinuierlich zustellbaren Zustellantrieb umfaßt. Unter kontinuierlich zustellbaren Zustellantrieben sollen alle nicht schrittmotorisch arbeitenden Antriebe verstanden werden, also insbesondere die jetzt vorwiegend für Zustellaufgaben verwendeten Gleichstromantriebe. Die Analogsteuerung dient beispielsweise dazu, während des Bearbeitungsvorganges den Arbeitsspalt konstant zu halten, indem Abweichungen vom Sollmaß der Analogsteuerung als positive oder negative Spannungen zugeführt und damit eine positive oder negative Zustellung verursacht wird.

Beim Einrichten der Elektrode einer Elektroerosionsmaschine wird diese im Eilgang bis zur Berührung mit dem Werkstück gefahren; die dabei erreichte Position gilt als Ausgangsposition für den Bearbeitungsvorgang, bei welchem dann die übliche Spaltregelung über die Spaltspannung einsetzt.

Bei einer bekannten Elektroerosionsmaschine wird die Eilganggeschwindigkeit bis zum Kontakt der Elektrode mit dem Werkstück beibehalten. Durch diesen Kontakt wird dann der Zustellantrieb abgeschaltet und abgebremst. Abhängig von der Dynamik des Antriebes ergibt sich eine unvermeidliche Stauchung der Elektrode bzw. der diese tragenden Bauteile. Um diese Stauchung gering zu halten, kann die Einrichtge-

0058769

- 2 -

schwindigkeit nur relativ gering sein, was die Nebenzeiten der Maschine nachteilig verlängert.

Bei einer anderen bekannten Elektroerosionsmaschine arbeitet die Analogsteuerung in der Einrichtphase als Zweipunktregler, d. h. nach dem Kontakt der Elektrode mit dem
Werkstück erfolgt eine Abbremsung und Rückführung der
Elektrode soweit, daß sie außer Kontakt mit dem Werkstück ist; dieser Vorgang wiederholt sich periodisch,
wobei die Bedienungsperson durch geschicktes Unterbrechen dieses Vorgangs - im allgemeinen nach mehreren Versuchen - mehr oder weniger genau den exakten Berührungspunkt einstellen kann (DECKEL DE 10). Auch in diesem Fall
ist es erforderlich, die Einrichtgeschwindigkeit möglichst
gering zu halten, um sowohl die Stauchung als auch das Maß
der anschließenden Abhebung der Elektrode vom Werkstück
gering zu halten.

Es ist die Aufgabe der Erfindung, ein Verfahren und eine
Einrichtung zu schaffen, welche es erlauben, bei geringer, stets gleichbleibender Stauchung eine hohe Einrichtgeschwindigkeit zu erzielen und das Einrichten von der
Geschicklichkeit der Bedienungsperson unabhängig zu machen.

Diese Aufgabe ist erfindungsgemäß durch ein Verfahren der
eingangs genannten Art gelöst, bei welchem der Analogsteuerung jeweils definierten Wegvorgaben entsprechende
Spannungspulse zugeführt werden, wobei nach jedem Spannungspuls abgefragt wird, ob Berührungskontakt vorliegt oder
nicht und wobei bei vorhandenem Kontakt die Zufuhr weiterer Spannungspulse unterbrochen wird. Die Elektrode
wird also in rasch aufeinanderfolgenden Schritten zugestellt, wobei jeder Schritt erst dann erfolgt, wenn kein
Berührungskontakt vorliegt.

Nach einem Merkmal der Erfindung ist vorgesehen, daß die Wegvorgaben so gewählt sind, daß die bei Auffahren der Elektrode auf das Werkstück mögliche Stauchung der Elektrode bzw. der diese tragenden Bauteile das höchstzulässige Maß nicht überschreiten kann, selbst dann nicht, wenn die Stauchung das Maß des gesamten Wegschrittes aufweist.

Das vorliegende Verfahren erlaubt deshalb, in einem einzigen Arbeitsgang die Elektrode in ihre Arbeitsstellung zu fahren, wobei trotz höherer Antriebsdynamik ein bestimmtes, zulässiges Stauchungsmaß nicht überschritten werden kann.

Zur Durchführung des obenbeschriebenen Verfahrens dient erfindungsgemäß eine Vorrichtung, bei der an den Eingang der Analogsteuerung ein Spannungspuls-Generator angeschlossen ist, wobei eine Einrichtung vorgesehen ist, welche bei vorhandenem Berührungskontakt zwischen Elektrode und Werkstück die Zufuhr weiterer Spannungpulse zur Analogsteuerung unterbricht.

Die Einrichtung zur Unterbrechung der Zufuhr der Spannungspulse kann beispielsweise ein einfacher Unterbrecherschalter o. dgl. sein. Wenn die Elektroerosionsmaschine mit einer NC-Steuerung zur Steuerung der Arbeitsprogramme ausgestattet ist, kann erfindungsgemäß der Spannungspuls-Generator in diese NC-Steuerung integriert sein. Die Größe der von diesem Generator erzeugten Spannung und/oder die Pulsdauer, die die Länge des Schrittweges bestimmen, sind erfindungsgemäß einstellbar.

Ein Ausführungsbeispiel der Erfindung ist in der Zeichnung dargestellt und im folgenden näher beschrieben. Es zeigen:

Fig. 1 ein Weg-Zeit-Diagramm für ein herkömmliches Einrichtverfahren;

Fig. 2 ein Weg-Zeit-Diagramm für das erfindungsgemäße Verfahren;

Fig. 3 ein Blockschaltbild einer Vorrichtung zur Durchführung des Verfahrens nach Fig. 2.

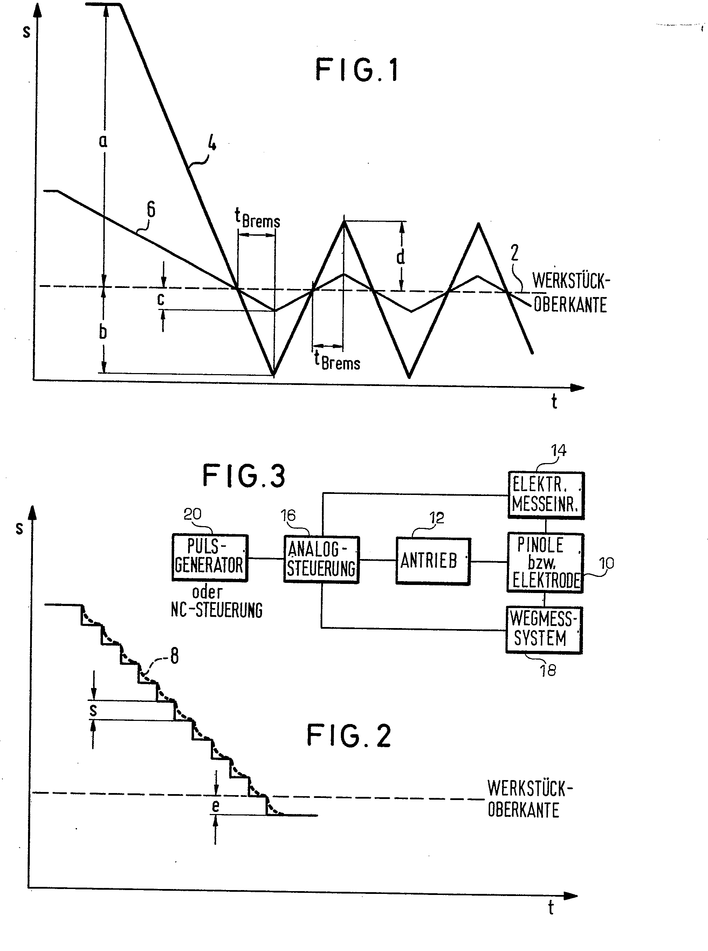

Wie Fig. 1 zeigt, hat die Elektrode einer herkömmlichen Erosionsmaschine, beispielsweise zu Beginn einer Bearbeitung, einen Abstand $a$ von der Werkstückoberfläche 2. Um die Einrichtzeit gering zu halten, wird die Elektrode mit relativ hoher Geschwindigkeit entlang der Linie 4 zugestellt, bis sie die Werkstückoberfläche 2 berührt. Durch den Kontakt der Elektrode mit dem Werkstück wird der Zustellantrieb abgeschaltet und abgebremst. Abhängig von der Eigendynamik des Antriebes braucht er eine gewisse Zeit $t_{Brems}$, bis er zum Stillstand kommt. Dadurch erfährt die Elektrode bzw. die diese tragenden Bauteile eine gewisse Stauchung um den Betrag $b$, die umso größer ist, je höher bei einer gegebenen Zeit $t_{Brems}$ die Zustellgeschwindigkeit ist. Um die Stauchung z. B. auf einen zulässigen Wert von $c$ zu begrenzen, muß mit der wesentlich kleineren Zustellgeschwindigkeit entlang der Linie 6 gefahren werden.

Wie weiterhin aus Fig. 1 ersichtlich, arbeitet die Analogsteuerung als sogenannte Zweipunkt-Regelung, d. h. nach dem Stillstand wird die Elektrode zurückgezogen, wobei sie in Abhängigkeit von $t_{Brems}$ um den Betrag $d$ vom Werkstück abhebt. Dabei hängt es von der Geschicklichkeit der Bedienungsperson ab, die Elektrode so anzuhalten, daß sie das Werkstück gerade berührt. Das erfordert im allgemeinen mehrere Versuche und erhöht die Nebenzeit beträchtlich.

Fig. 2 zeigt den Zustellvorgang nach dem erfindungsgemäßen Verfahren. Dabei wird die Elektrode entlang der gestrichelten Linie 8 schrittweise zugestellt. Die Schrittiefe s hängt bei einer bestimmten, gegebenen Dynamik des Zustellantriebs von der Spannung des der Analogsteuerung zugeführten Spannungspulses sowie von dessen Zeitdauer ab und läßt sich durch Variation dieser Werte vorgeben. Wie aus Fig. 2 erkennbar ist, kann demnach die Stauchung auch in dem ungünstigsten Fall, in welchem der letzte Schritt bis unmittelbar vor die Werkstückoberfläche führt, die Schrittiefe s nicht überschreiten. Insgesamt kann auf diese Weise mit hoher Zustelldynamik und mit hoher Zustellgeschwindigkeit gearbeitet werden, wobei in einem Arbeitsgang und unabhängig von der Geschicklichkeit der Bedienungsperson die Elektrode bei geringer Stauchung zum Werkstück geführt wird.

Fig. 3 zeigt ein Blockschaltbild einer Vorrichtung zur Durchführung des erfindungsgemäßen Verfahrens. Die Elektrode 10 bzw. die diese haltende Pinole ist mit einem Zustellantrieb 12 verbunden. Dieser ist als kontinuierlich arbeitender Antrieb, wegen seiner guten Regelbarkeit vorzugsweise als Gleichstromantrieb, ausgebildet. Während der Bearbeitungsphase wird die ein Maß für die Spaltgröße zwischen Elektrode und Werkstück darstellende Spaltspannung mittels einer elektrischen Meßeinrichtung 14 gemessen und der Analogsteuerung 16 zugeführt, die diese Spaltspannung in Zustellbewegungen des Antriebs umsetzt. Zusätzlich kann ein Wegmeßsystem 18 vorgesehen sein, welches in bekannter Weise Differenzen zwischen Soll- und Istwert als Spannungssignal an die Analogsteuerung 16 gibt und so das Aufsuchen bestimmter Positionen durch die Elektrode 10 ermöglicht.

Ein weiterer Eingang der Analogsteuerung 16 ist mit einem Spannungspuls-Generator 20 verbunden. Die eingegebenen

- 6 -

Spannungspulse, nach Spannungshöhe und Zeitdauer festgelegt, werden durch die Analogsteuerung 16 in definierte
Zustellwege umgesetzt, wie weiter vorne schon beschrieben.
Der Spannungspuls-Generator 20 kann auch in eine NC-
steuerung integriert sein.

- 7 -

Patentansprüche:

1. Verfahren zum Einrichten der Elektrode einer Elektroerosionsmaschine, welche einen durch die Spannung im Arbeitsspalt über eine Analogsteuerung kontinuierlich zustellbaren Zustellantrieb umfaßt, dadurch gekennzeichnet,

- daß der Analogsteuerung (16) jeweils definierten Wegvorgaben entsprechende, definierte Spannungspulse zugeführt
werden,
- daß nach jedem Spannungspuls abgefragt wird, ob Berührungskontakt zwischen Elektrode (10) und Werkstück (2)
vorliegt oder nicht,
- und daß bei vorhandenem Berührungskontakt die Zufuhr
weiterer Spannungspulse unterbrochen wird.

2. Verfahren nach Anspruch 1, dadurch gekennzeichnet,
daß die Wegvorgaben (s) kleiner sind als die bei Auffahren
der Elektrode (10) auf das Werkstück (2) höchstzulässige
Stauchung der Elektrode (10) bzw. der diese tragenden Bauteile.

3. Vorrichtung zur Durchführung des Verfahrens nach den
Ansprüchen 1 oder 2, dadurch gekennzeichnet, daß an den
Eingang der Analogsteuerung (16) ein Spannungspuls-Generator (20) angeschlossen ist und daß eine Einrichtung
vorgesehen ist, welche bei vorhandenem Berührungskontakt
zwischen Elektrode (10) und Werkstück (2) die Zufuhr der
Spannungspulse zur Analogsteuerung (16) unterbricht.

4. Vorrichtung nach Anspruch 3, dadurch gekennzeichnet,
daß die Einrichtung zur Unterbrechung der Zufuhr der
Spannungspulse zur Analogsteuerung (16) als Unterbrechungsschalter o. dgl. ausgebildet ist.

- 8 -

5. Vorrichtung nach einem der Ansprüche 3 oder 4 mit einer NC-Steuerung zur Steuerung der Maschinenfunktionen, dadurch gekennzeichnet, daß der Spannungspuls-Generator (20) in die NC-Steuerung integriert ist.

6. Vorrichtung nach einem der Ansprüche 3 bis 5, dadurch gekennzeichnet, daß die Höhe der Spannung und/oder die Pulsdauer des Spannungspuls-Generators (20) variabel einstellbar sind.

1/1

**FIG.1**

**FIG.3**

**FIG.2**